# DEMANDE DE BREVET EUROPEEN

(11) **EP 3 797 579 A1**
(43) Date de publication de la demande: **31.03.2021**
(21) Numéro de dépôt: 20197669.3
(22) Date de dépôt: 23.09.2020
(51) Int. Cl.: A01F 15/10

(54) **MODULE DE BOTTELAGE STATIONNAIRE**

(30) Priorité: 24.09.2019 WO PCT/IB2019/058091
(71) Demandeur: Bourguet, Vincent, 1614 Granges (Veveyse) (CH)
(72) Inventeur: Bourguet, Vincent, 1614 Granges (Veveyse) (CH)
(74) Mandataire: Grosfillier, Philippe

(57) **Abrégé**

Module de bottelage stationnaire (2) comprenant une partie supérieure (4) et une partie inférieure (5), la partie supérieure (4) présentant une forme d'entonnoir adapté pour la réception et le transfert de foin vers la partie inférieure (6), cette dernière étant configurée pour être reliée à des moyens de transfert (14) destinés à acheminer du foin vers une botteleuse (3).

## Description

### Domaine de l'invention

L'invention concerne la récolte du foin.

### Etat de la technique

Par « foin », on entend tous les types d'herbes séchées.

Pour récolter le foin, on utilise communément une botteleuse. Cette machine est remorquée derrière un tracteur et transforme les andins de foin en bottes de foin, le plus souvent en forme de parallélépipède rectangle ou de cylindre.

L'utilisation d'une botteleuse nécessite cependant que le foin soit sec. Pour cette raison, on laisse souvent le foin sécher durant quelques jours après la coupe. Si le foin n'a pas été suffisamment séché, un bottelage prématuré peut avoir des conséquences parfois dramatiques. Un foin humide peut fermenter au cœur de la botte et dans certains cas, s'enflammer.

Une situation particulièrement problématique peut se produire en cas de météo instable. Dans ce cas, le foin est récolté en vrac, p.ex. à l'aide d'une auto-chargeuse, avant qu'il ne soit complètement sec. Le foin est ensuite entreposé dans un séchoir, le plus souvent dans une grange. Une fois séché, il est entreposé sur place ou sert immédiatement de fourrage pour les animaux. Cependant, si ce scénario se répète, la place pour l'entreposage pourrait ne pas suffire. En effet, le foin en vrac prend considérablement plus de place que le foin bottelé.

Il existe donc un besoin de remédier aux problèmes précités.

### Description générale de l'invention

Un but de l'invention vise à réduire, voire éliminer, le volume de foin séché qui se trouve dans un séchoir.

Un autre but de l'invention vise à atteindre le but précédent en exploitant le plus possible les dispositifs de bottelage de l'état de la technique.

A cet effet, l'invention a pour objet de réaliser un bottelage stationnaire, sur le lieu du séchoir, p.ex. dans une grange.

Comme décrit ci-après, l'invention permet d'utiliser une botteleuse classique en position fixe, sans devoir modifier la botteleuse ou son système de récupération du foin.

Actuellement, il n'est pas possible d'utiliser une botteleuse lorsqu'elle est stationnée car elle fonctionne uniquement lorsqu'elle est en mouvement.

L'invention proprement dite concerne l'ajout d'un élément dans le dispositif de bottelage, nommé module dans le présent document.

Selon un mode préférentiel de réalisation de l'invention, le module est fixé sur le relevage d'un tracteur (relevage standard), la botteleuse étant fixée au module. Le fonctionnement de la botteleuse est identique au fonctionnement standard et aucune modification n'est nécessaire ni sur le tracteur, ni sur la botteleuse.

Selon une variante particulièrement avantageuse de l'invention, le module permet de réaliser trois opérations, à savoir la réception du foin, la régulation du flux de foin et le transfert du foin vers la botteleuse.

L'énergie nécessaire au fonctionnement du module peut être fournie hydrauliquement, notamment au moyen d'une ou de plusieurs prises hydrauliques standard du tracteur. L'énergie nécessaire au fonctionnement de la botteleuse (la presse) peut être fournie par une prise de force.

Le module selon l'invention est de préférence compatible avec tous les types de botteleuses. Il peut être avantageusement installé entre le tracteur et la botteleuse. Si la botteleuse a besoin d'énergie hydraulique pour fonctionner, celle-ci peut être transmise/relayée par le module. Si la botteleuse a besoin d'énergie mécanique pour fonctionner, elle peut être transmise par une prise de force standard. La botteleuse peut être fixée au module au moyen d'un dispositif d'attelage standard.

L'utilisation du système à l'aide d'une autre source d'énergie que celle du tracteur standard est également possible, par exemple à l'aide d'une pompe hydraulique et en entraînant une prise de force. Le système peut alors être utilisé à l'intérieur, sans nécessiter de moyens de ventilation dédiés.

### Description détaillée de l'invention

L'invention sera mieux comprise dans ce chapitre au moyen d'un exemple illustré par les figures suivantes :
Figure 1 : Ensemble constitué d'un tracteur, d'un module selon l'invention et d'une botteleuse
Figure 2 : Module faisant partie de l'ensemble illustré sur la figure 1

Références numériques utilisées dans les figures :
1. Tracteur
2. Module
3. Botteleuse
4. Partie supérieure
5. Partie médiane
6. Partie inférieure
7. 1^{er} panneau partie supérieure
8. 2^{e} panneau partie supérieure
9. Axe rotation 1^{er} panneau
10. Axe rotation 2^{e} panneau
11. 1^{er} rouleau
12. 2^{e} rouleau
13. Tige
14. Tapis roulant

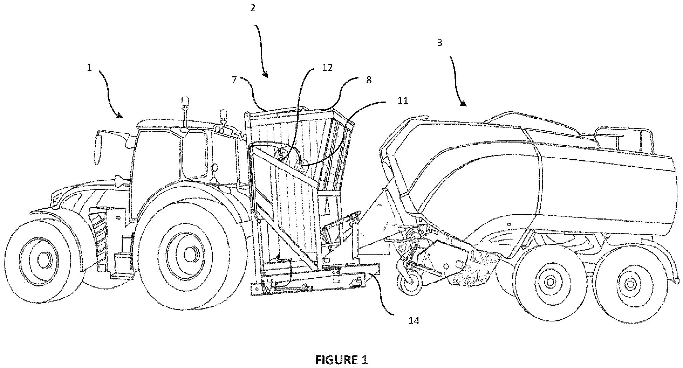

L'ensemble représenté sur la figure 1 comprend un tracteur standard **1,** un module **2** et une botteleuse standard **3.**

Dans cet exemple, le module **2** est fixé sur le relevage (non-illustré) du tracteur **1.**

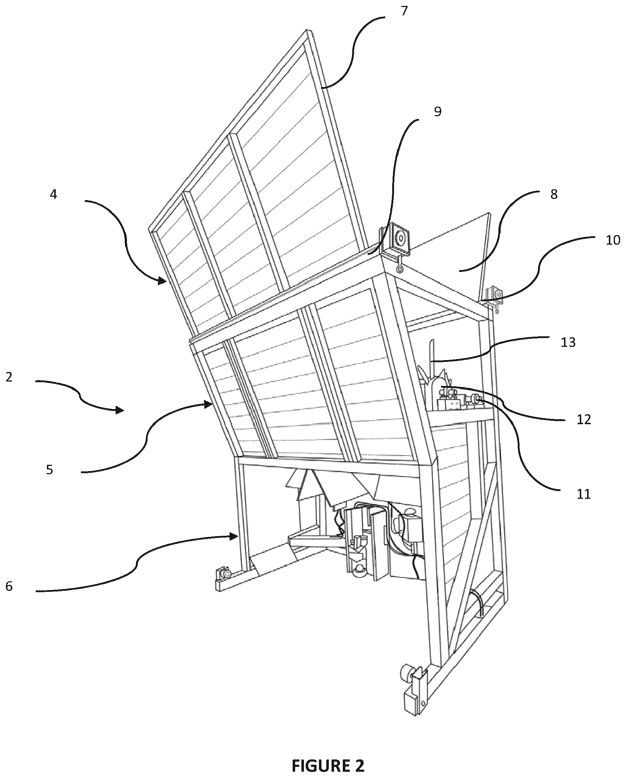

Le module **2** (figure 2) comprend une partie supérieure **4,** une partie médiane **5** et une partie inférieure **6.**

La partie supérieure **4** présente une forme d'entonnoir, au travers duquel le foin en vrac peut être introduit, p.ex. au moyen d'un bras mécanisé doté à son extrémité d'une pince de saisie de foin.

Dans l'exemple illustré, la partie supérieure **4** comprend deux panneaux **7,8** montés pivotants autour d'axes **9,10.** De la sorte, les panneaux **7,8** peuvent être rabattus en position horizontale lorsque le module **2** n'est pas utilisé.

Tout autre forme de partie supérieure **4** peut être utilisée dans le cadre de la présente invention, pour autant qu'elle convienne à l'usage visé. La section de l'entonnoir n'est pas nécessairement un quadrilatère, comme illustré dans cet exemple. Elle peut être p.ex. triangulaire, hexagonale ou circulaire.

Des considérations similaires s'appliquent aux dimensions de la partie supérieure et plus généralement à celle du module **2.** De préférence cependant, ce dernier est dimensionné pour être harmonieusement relié à une botteleuse **3** et, le cas échéant, à un tracteur **1.**

La partie médiane **5** a pour fonction de démêler et réguler le flux de foin entre la partie supérieure **4** et la partie inférieure **6.** A cet effet, elle comprend deux rouleaux **11,12** dotés de tiges **13** disposées radialement par rapport aux axes des rouleaux **11,12.**

La rotation des rouleaux **11,12** peut être passive ou entraînée au moyen d'un moteur, de préférence hydraulique.

Deux rouleaux **11,12** sont utilisés dans cet exemple. Un seul ou au moins trois rouleaux peuvent également être utilisés.

Tout autre moyen permettant de démêler et/ou réguler le flux de foin peut être utilisé.

Il est également possible de ne pas utiliser des moyens pour démêler et/ou réguler le foin. Dans ce cas, le foin transite directement, par gravité, de la partie supérieure **4** vers la partie inférieure **6.**

La partie inférieure **6** est configurée pour accueillir un tapis roulant **14** (figure 1) qui achemine le foin vers la botteleuse **3.**

Le bottelage est réalisé comme suit :
Du foin de préférence séché est introduit en vrac dans l'entonnoir de la partie supérieure **4,** manuellement ou au moyen d'un bras mécanisé doté d'une pince.

Les rouleaux **11,12** de la partie médiane **5** régulent l'arrivée du foin et le démêlent puis le déplacent dans la partie inférieure, au bas de laquelle est disposé le tapis roulant, ce dernier acheminant le foin vers la botteleuse **3.**

Sur le tapis roulant **14,** le foin a une forme similaire à un andin, donc compatible avec la botteleuse **3.** Le mouvement relatif du foin par rapport à la botteleuse **3,** induit par le tapis roulant **14,** est similaire au déplacement de la botteleuse **3** dans un champ. De la sorte, toutes les fonctionnalités de la botteleuse **3** sont activées, rendant ainsi possible le bottelage du foin lorsque la botteleuse est fixe.

Les bottes de foin produites sortent de manière standard à l'arrière de la botteleuse **3** et peuvent alors être saisies, déplacées et entreposées.

Le module **2** fonctionne harmonieusement avec la botteleuse **3** et la source d'énergie, p.ex. le tracteur **1.** L'énergie hydraulique est fournie par le tracteur **1** ou par un système actionnant une prise de force et fournissant l'énergie hydraulique nécessaire au fonctionnement du module **2.** L'énergie hydraulique peut ensuite être relayée au moyen de conduites hydrauliques appropriées à la botteleuse **3** tout en maintenant la fonction de régulation asservie notamment à la charge, plus communément appelée Load Sensing (LS), si celle-ci est existante. La prise de force nécessaire au fonctionnement de la botteleuse **3** peut être prolongée jusqu'à cette dernière au moyen d'un arbre de transmission traversant la machine.

Avantageusement, un système de commande électronique contrôle et gère les vitesses des différents éléments du dispositif (rouleaux et tapis roulant).

L'invention n'est bien entendu pas limitée aux exemples décrits dans le présent document.

## Revendications

1. Module de bottelage stationnaire (2) comprenant une partie supérieure (4) et une partie inférieure (5), la partie supérieure (4) présentant une forme d'entonnoir adapté pour la réception et le transfert de foin vers la partie inférieure (6), cette dernière étant configurée pour être reliée à des moyens de transfert (14) destinés à acheminer du foin vers une botteleuse (3).

2. Module selon la revendication 1 comprenant une partie médiane (5) disposée entre la partie supérieure (4) et la partie inférieure (6), ladite partie médiane (5) comprenant un mécanisme (11-13) pour démêler le foin et/ou réguler son flux.

3. Module selon la revendication 2 dans lequel ledit mécanisme est constitué d'au moins un rouleau (11,12).

4. Dispositif de bottelage comprenant un module (2) selon l'une des revendications précédentes, une botteleuse (3) et source d'énergie pour faire fonctionner le module (2) et la botteleuse (3).

5. Dispositif selon la revendication 4 dans lequel la source d'énergie est un tracteur 1.

6. Dispositif selon la revendication 4 dans lequel la source d'énergie est un élément statique, tel qu'une pompe hydraulique.
